# EUROPEAN PATENT SPECIFICATION

(11) **EP 2 387 551 B1**
(45) Date of publication and mention of the grant of the patent: **27.07.2016**
(21) Application number: 10703921.6
(22) Date of filing: 19.01.2010
(51) Int. Cl.: C02F 1/66, C02F 103/12

(54) **A UNIT FOR AND METHOD OF TREATING WASTE**
EINHEIT UND VERFAHREN ZUR BEHANDLUNG VON ABFALL
UNITÉ POUR LE TRAITEMENT DE DÉCHETS ET PROCÉDÉ PERMETTANT LE TRAITEMENT DE DÉCHETS

(30) Priority: 19.01.2009 GB 0900891
(43) Date of publication of application: 23.11.2011
(73) Proprietor: Siltbuster Limited, Monmouthshire NP25 5JA (GB)
(72) Inventor: COULTON, Richard, Henry, Monmouth NP25 3NW (GB)
(74) Representative: Bardo, Julian Eason
(86) International application number: PCT/GB2010/000075
(87) International publication number: WO 2010/082038

(56) References cited:
- DE-A1- 2 225 154
- JP-A- 57 065 385
- JP-A- 2002 333 496
- JP-A- 2005 000 875
- US-A1- 2003 121 866
- US-A1- 2005 145 548
- US-A1- 2007 170 119

## Description

This invention relates to a unit for, and a method of, treating waste, in particular, but not exclusively, waste from on site concreting operations and the cleaning of concrete delivery lorries.

In the construction industry, concrete is emptied from lorries via a discharge chute mounted to the lorry. After the concrete has been emptied, the discharge chute must be washed out before the lorry can leave the construction site. The waste so generated, referred to herein as "washout", comprises waste concrete solids (hereinafter referred to as concrete solids) and a volume of high pH, alkaline water hereinafter referred to as washwater. Sometimes the pH of the washwater can be as high as pH 13.

Traditionally, the washout (containing the waste concrete and the alkaline water either released from the concrete itself or from washing concreting equipment) is dumped into a plastic-lined skip at the construction site. When the skip is full, it is transported to a tip to be disposed of. Transporting the skip to a tip causes problems. Firstly, the washwater is highly alkaline and is often spilt over the road on the way to the tip. Secondly, it is illegal to tip liquid waste into landfill. Hence, once the skip arrives at the tip, the washwater cannot be disposed of simply.

US 2007/0170119 provides a system for treating liquid concrete waste. A concrete washout containing unit in the form of a bin is configured to roll on and off a transport vehicle for delivery to a construction site. When the concrete washout waste is to be removed from the site, a liquid concrete waste vacuum system is first used to remove the liquid waste from the bin and store it in a storage tank on the vehicle. The solid and liquid wastes are then transported on the vehicle to a treatment facility where various tanks, each with capacities of 8,000 gallons (about 36,000 litres) are provided; a Carbon Dioxide injection system is associated with one of the tanks for lowering the pH of the liquid.

Other plants for treating waste from the concrete industry are also known.

It is an object of the present invention to provide a unit for, and a method of, receiving the washout, separating the concrete solids and treating washwater to overcome some or all of the above problems.

According to one aspect of the invention there is provided a portable unit for treating washout, according to claim 1.

Providing the portable unit with a neutralising agent source allows the alkaline washwater to be neutralised. The water can then be simply disposed of without having to be transported. This reduces transportation costs and eliminates the risk of spilling alkaline water on a road.

The portable unit can be taken to any site where it is needed and once it is no longer needed taken to another site. Thus the unit is preferably able to be carried on a lorry, preferably on a skip lorry.

Preferably, the unit has a cubic capacity of 1 to 20m³, preferably 3 to 10m³ and most preferably 4 to 6m³.

Preferably, the pH adjuster further comprises:
a pH sensor for measuring a pH level of the washwater, and
a neutralising agent supply controller for controlling supply of the neutralising agent to the washwater, wherein the pH sensor and neutralising agent supply controller are connected such that the neutralising agent supply controller can regulate the supply of the neutralising agent based on the pH level measured by the pH sensor.

Providing a unit with a pH sensor and a supply controller that allows the pH level of the washwater to be controlled using a feedback system prevents too much or too little neutralising agent being added to the washwater.

Preferably, the unit comprises a battery accommodation region for accommodating a battery and the pH adjuster is arranged to be powered by the battery such that the unit does not have to rely on an external power supply. This is especially significant in enabling the unit to be used in any of a wide variety of applications.

Preferably, the neutralising agent source accommodation region and the battery accommodation region are sized so as to accommodate a neutralising agent source and battery that, in use, last approximately the same amount of time. This means that the battery and neutralising agent source can be replaced/re-charged at the same time, making maintenance of the unit easier.

Preferably, the battery accommodation region, neutralising agent source accommodation region and/or the neutralising agent supply controller are all contained within a chamber of the unit. When the battery, neutralising agent source and supply controller are all contained in a single chamber, which may be compact, the amount of space they take up can be reduced. The regions for receiving washout and the washwater containment region can then be larger for a given size of unit and hence, more washout can be contained and the time between emptyings of the unit can be increased.

Preferably, the neutralising agent is carbon dioxide gas. Adding carbon dioxide gas is safer than adding acid to the washwater

Preferably, the unit includes a plurality of covers covering the washwater containment region and preferably also a viewing flap which can be opened to ascertain the remaining capacity of the washwater containment region. This makes it easy to check to see if the unit needs emptying or will soon need emptying.

The unit comprises a washout receiving region in which the washout is received and the solids separated from the washwater which is stored in the washwater containment region. The two regions are arranged such that the solids in the washout are retained in the washout receiving region and washwater in the washout is drained from the washout receiving region into the washwater containment region. Separating the liquid from the solid in the washout makes disposal easier.

Preferably, the washwater containment region is fully covered. Providing a covered washwater containment region allows the safe storage of the washwater and reduces the risk of spilling liquid from the unit when it is being transported.

The pH adjuster is arranged to supply a neutralising agent to the washwater in the washwater containment region.

The ratio of the volume of the washwater containment region to the volume of the washout receiving region is approximately equal to the expected ratio of the volume of liquid in the washout to volume of solid material in the washout. In that case the two regions are likely to become full at about the same time, making it efficient to empty them at the same time, making maintenance of the unit easier. In a typical washout operation, the washout generated contains approximately 10 kg of concrete and 50 litres of water. The ratio of the volume of the washwater containment region to the volume of the washout receiving region is between 3 and 8, more preferably between 4 and 6, and most preferably about 5.

The washout receiving region is arranged to accommodate a permeable container, which may be a flexible or a rigid and perforated bin, such that when washout is received in the permeable container, liquid in the washout drains through the permeable container into the washwater containment region and solid material in the washout is retained in the permeable container. This means that the solid material from the washout can be easily removed from the washout receiving region by simply removing the permeable container. If desired a further removable container may be provided in the washout receiving region below the permeable container for receiving solid material that is sufficiently fine to pass through the permeable container. The further removable container may be open-topped but not otherwise permeable.

Preferably, the washout receiving region tapers in a downward direction such that when the permeable sack contains set concrete, the sack can easily be lifted from the unit.

Preferably, the boundary walls of the washout receiving region comprise a mesh structure to allow liquid in the washout to drain into the washwater containment region.

Preferably, the washout receiving region comprises two portions, each portion being arranged to accommodate a respective permeable container. This enables smaller containers of a standard size to be used and allows one container to be removed and emptied while another container is still in place in the unit, allowing the unit still to be used.

Preferably, the washwater containment region is fitted with a valve to allow liquid collected to be drained from the unit.

According to another aspect of the invention, there is provided a method of neutralising washout from concreting operations according to claim 6.

Connecting the unit to a neutralising agent source allows the alkaline water in the washout to be neutralised. The water can then be simply disposed of without having to be transported. This reduces transportation costs and eliminates the risk of spilling alkaline water on a road.

Preferably, the method comprises the steps of:
measuring the pH level of the washwater in the washwater containment region of the unit, and
regulating the supply of the neutralising agent based on the pH level measured.

Preferably, the method comprises the steps of:
accommodating a permeable container in the washout receiving region,
receiving washout in the permeable sack,
draining liquid in the washout through the permeable container into the washwater containment region, and
retaining solid material in the washout in the permeable container.

The unit to contain the washout may be in any of the forms defined above.

The unit of the invention is defined above as being for treating washout from concreting operations. It should be understood, however, that in the broadest aspect of the invention the unit may be employed for treating other alkaline waste material that includes solid and liquid material.

By way of example, a unit for, and method of, neutralising washout from a concrete discharge chute will now be described with reference to the accompanying drawings of which:
- Figure 1: is a front isometric view of a unit according to the present invention;
- Figure 2: is a cutaway isometric view of the unit of Figure 1, with lids missing for clarity of illustration;
- Figure 3: is a rear isometric view of the unit of Figure 1, with lids missing for clarity of illustration; and
- Figure 4: is another rear isometric view of the unit of Figure 1, with the lids shown.

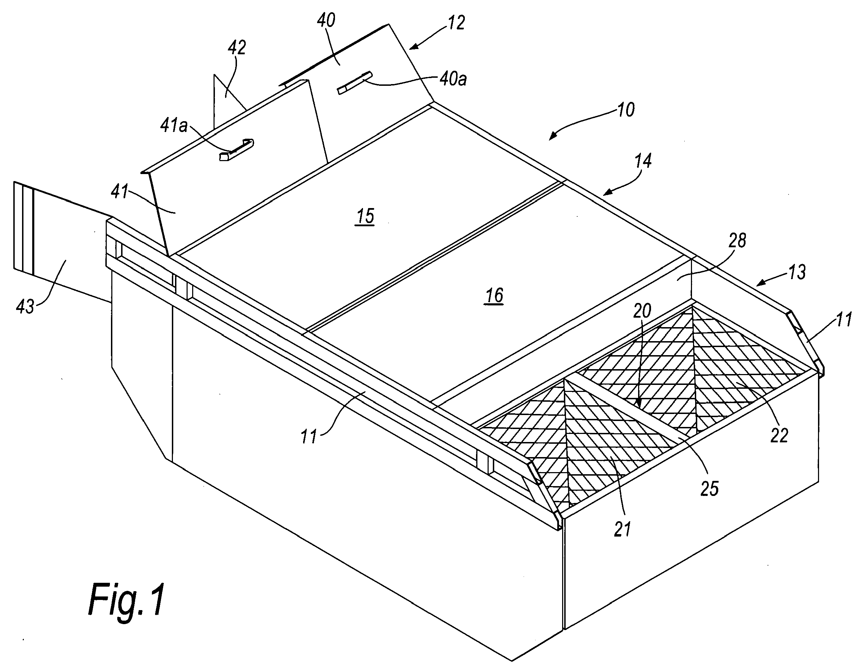

Figure 1 shows a unit 10. The unit has a cubic capacity of approximately 5m³. The unit 10 is a conventional skip shape with lifting bars 11 provided along both long sides of the unit. These lifting bars 11 enable the unit 10 to be transported. As shown in Figure 1, the unit 10 can be conceptually divided into three regions; a far end region 12, a central region 14 and a near end region 13.

The central region 14 provides the washwater containment region and takes up most of the volume of the unit. This is covered by two lids 15, 16.

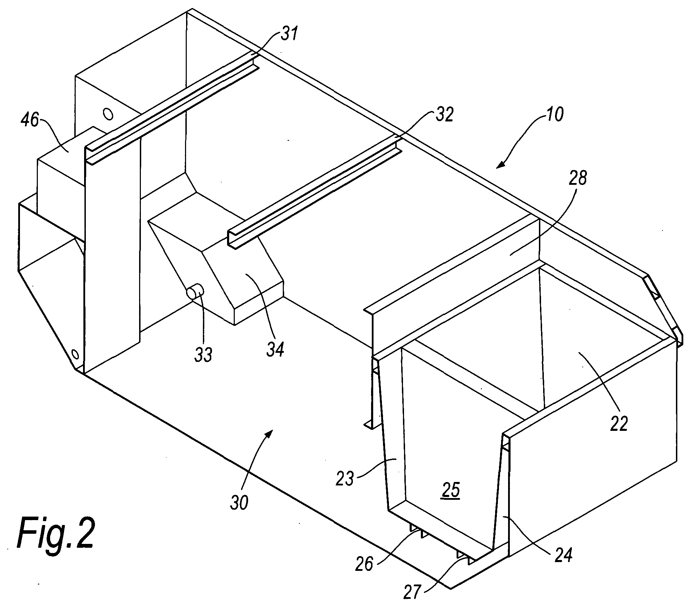

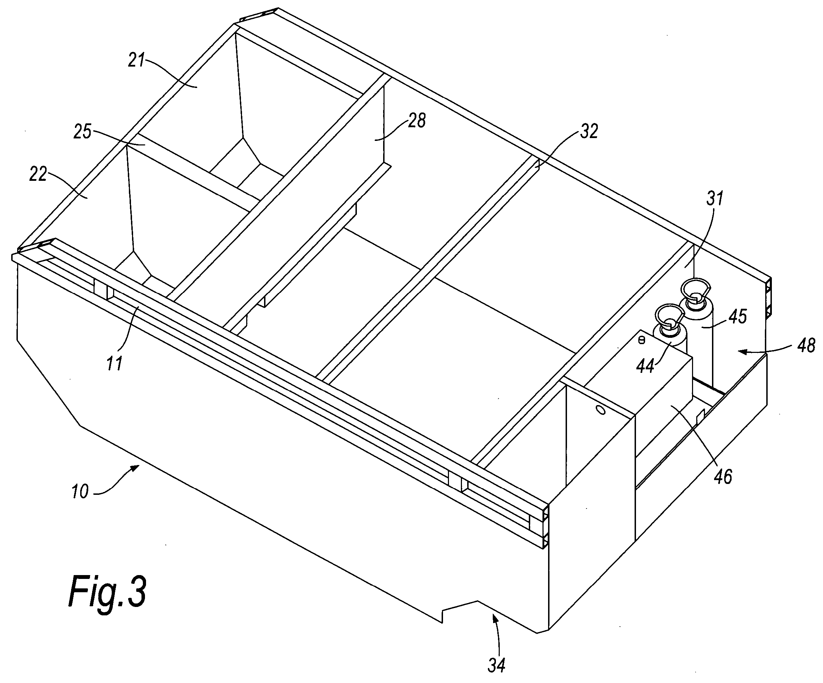

At the rear (region 13) is the washout receiving region 20. Washout from a concreting operation is allowed to run into this region 20 and into baskets 21, 22 placed there. The baskets 21, 22 are made of a mesh material to allow liquid to drain out of them. The mesh of the material is not shown in Figures 2 and 3 for simplicity. The two baskets 21, 22 are separated by a dividing bar 25.

In Figure 2, basket 21 is shown cut-away. This shows tapered walls 23, 24 of the basket 21. It also shows that the basket 21 is supported on two rail-like supports 26, 27. The supports 26, 27 allow the basket 21 to be raised from the floor of the unit 10. Basket 22 is also supported by these rail like supports and has tapered side walls.

The baskets 21, 22 are contained within the washout receiving region 20 by a panel 28 attached to side walls of the unit 10 and extending across the width of the unit 10. The panel 28 only extends about halfway to three quarters the way down the height of the unit 10, thereby allowing liquid drained from the baskets 21, 22 to pass under the panel 28 and into the central region 14 of the unit 10.

The central region 14 of the unit 10 provides a liquid chamber 30 where liquid drained from the baskets 21, 22 is collected. At the top of the unit 10, in the central region 14, are located two bars 31, 32, extending across the width of the unit 10. The lids 15, 16 rest on bars 31, 32 and the top of panel 28.

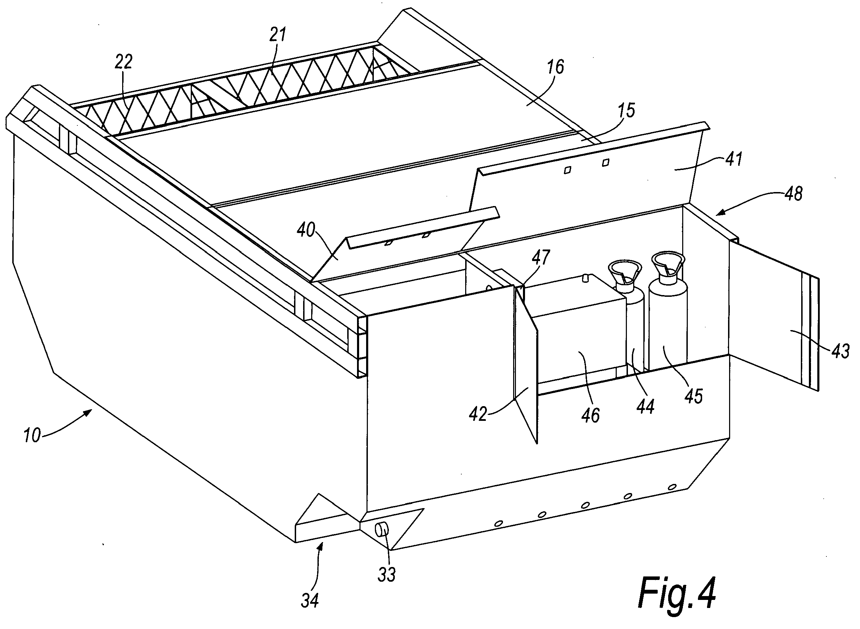

Towards the far end of the liquid chamber 30 is an indent section 34 in a corner of the bottom of the unit 10. The indent section 34 extends into the unit 10 thereby slightly reducing the capacity of the liquid chamber 30. From the outside of the unit 10, the indent section 34 provides an undercut region. This can be seen in Figure 4. The indent section 34 has a drainage hole 33 extending from the liquid chamber 30 to the outside of the unit 10. The drainage hole 33 is closed by a valve (not shown) to collect liquid in the chamber 30. When liquid is to be drained from the chamber 30, the valve is opened.

At the far region 12, there is a viewing flap 40 located on the top of the unit. The viewing flap 40 can be opened by lifting a handle 40a. A user can open the viewing flap 40 to see into the liquid chamber 30 and see how much capacity is left in the chamber 30.

Adjacent the viewing flap 40, also on the top of the unit 10, is an access flap 41. The access flap can be opened by lifting on handle 41a. The access flap 41 allows a user to look down into a chamber 48. There are also two access doors 42, 43 that are located on the end panel of the unit 10, below the access flap 41. These access doors 42, 43 open to allow horizontal access into the chamber 48. Hence, by opening access flap 41 and access doors 42, 43 a user can access the chamber 48 from the top and the end of the unit 10.

In the chamber 48, are two carbon dioxide cylinders 44, 45 standing upright on a right hand side of the chamber 48. The carbon dioxide cylinders are connected to a supply controller 47. The supply controller 47 is also located in the chamber 48 and is mounted on a left hand side wall of the chamber. 48. The supply controller 47 is supplied with power by a battery 46. The battery 46 is also located in the chamber 48 between the supply controller 47 and the carbon dioxide cylinders 44, 45.

The supply controller 47 is connected to a pH sensor (not shown) in the liquid chamber 30. It works on a feedback system and controls supply of the carbon dioxide to the liquid chamber 30 so that the liquid in the liquid chamber 30 is neutralised. The carbon dioxide is fed into the liquid chamber 30 by tubes (not shown) that are connected to the liquid chamber 30 via the supply controller 47.

In use, the unit 10 is firstly set up by ensuring a battery 46 and at least one carbon dioxide cylinder 44, 45 are provided. The battery 46 and carbon dioxide cylinders 44, 45 are connected to the supply controller 47. The drainage valve (not shown) is closed.

In addition, two permeable sacks (not shown), known in the construction industry as intermediate flexible bulk containers, are placed in the washout receiving region 20. One sack is placed in each basket 21, 22.

When a concrete discharge chute on a lorry is to be washed out, the lorry is driven so that the discharge chute is over the washout receiving region 20. Water is washed down the chute and the resulting washout is received in one or both of the two sacks in the baskets 21, 22. The water in the washout drains through the sacks and through the mesh of the baskets 21, 22. The water is collected in the liquid chamber 30.

The solid concrete in the washout is collected in the sacks in the baskets 21, 22. The concrete takes up the tapered shape of the baskets 21, 22 and then sets.

Further washouts can be performed in a similar way. The washout will be received by the sacks in the baskets 21, 22 and the water will drain into the liquid chamber 30 in a similar way. The solid concrete in the washout will be collected in the sacks on top of the concrete already present.

Throughout use of the unit 10, the pH sensor (not shown) monitors the pH of the water in the liquid chamber 30. It communicates with the supply controller 47 in the chamber 48. The supply controller 47 then controls the supply of the carbon dioxide from the cylinders 44, 45 to the liquid chamber 30. As more carbon dioxide is supplied to the liquid chamber, the pH reduces as the carbon dioxide neutralises the alkaline water.

If, at any time, it is suspected that the unit 10 may be full or nearly full (and therefore in need of emptying), the viewing flap 40 can be lifted. This allows a user to look inside the liquid chamber 30 and ascertain the remaining capacity.

If it is established that the liquid chamber 30 is full or nearly full and should be emptied, the valve (not shown) is opened. Allowing liquid to drain out of the unit via hole 33. It is important to note that the water should only be emptied if the water has been sufficiently neutralised to be easily and safely disposed of.

During use, the sacks in the baskets 21, 22 will also become full of set concrete. The sacks can be removed from the baskets 21, 22 by simply lifting them out. This may be done using a crane or other lifting device. The tapered walls 23, 24 of the baskets 21, 22 ensure that the sacks can be lifted out easily and that the set concrete does not cause the sacks to become wedged in the unit.

During use, the battery 46 will lose power. The battery 46 can be accessed by opening access flap 41 and/or access doors 42, 43 and can be replaced or re-charged. Similarly, carbon dioxide canisters 44, 45 can be re-filled or replaced.

The unit 10 of this particular example is designed to provide about 6 weeks of typical use. Hence, the battery 46 and the carbon dioxide canisters 44, 45 are expected to last approximately 6 weeks without replacement or recharging.

As will be understood, one particular embodiment of the invention has been described and many modifications can be made to that embodiment. For example, the permeable sacks may be replaced by rigid perforated containers. In addition, or alternatively, further open-topped containers may be placed below the permeable sacks or rigid perforated containers to collect solid material that is sufficiently fine to pass out of the permeable sacks or rigid perforated containers.

## Claims

1. A portable unit for treating washout, the unit comprising:
a region (20) for receiving the washout, and separating and storing concrete solids from the washout while transferring a washwater component from the washout receiving region (21), **characterised in that** the portable unit (10) further comprises:
a washwater containment region (14) for receiving the washwater component transferred from the washout receiving region (20) and for the storage and treatment of washwater,
a neutralising agent source accommodation region for accomodating a source of a neutralising agent (44,45), and
a pH adjuster (47) for neutralising the washwater,
wherein the pH adjuster is arranged to be connectable to the neutralising agent source, and wherein the pH adjuster is arranged to supply the neutralising agent to the washwater stored in the washwater containment region (14)
wherein the washout receiving region (21) and the washwater containment region (14) are arranged such that the solids in the washout are retained in the washout receiving region (20), and washwater in the washout is drained from the washout receiving region (20) into the washwater containment region (14), wherein the pH adjuster (47) is arranged to supply a neutralising agent to the washwater in the washwater containment region (14),
wherein the ratio of the volume of the washwater containment region (14) to the volume of the washout receiving region (20) is between 3 and 8, and
wherein the washout receiving region (20) is arranged to accommodate a permeable container (21,22), such that when washout is received in the permeable container (21,22), washwater in the washout drains through the permeable container (21,22) into the washwater containment region (14) and solid material in the washout is retained in the permeable container (21,22)

2. A unit as claimed in claim 1 wherein the pH adjuster further comprises:
a pH sensor for measuring a pH level of the washwater, and
a neutralising agent supply controller (47) for controlling supply of the neutralising agent to the washwater,
wherein the pH sensor and neutralising agent supply controller (47) are connected such that the neutralising agent supply controller can regulate the supply of the neutralising agent based on the pH level measured by the pH sensor.

3. A unit as claimed in claim 1 or claim 2 wherein the unit comprises a battery accommodation region for accommodating a battery (46) and wherein the pH adjuster (47) is arranged to be powered by the battery such that the unit does not have to rely on an external power supply.

4. A unit as claimed in claim 3 wherein the battery accommodation region, neutralising agent source accommodation region and the neutralising agent supply controller are all contained within a chamber (48) of the unit (10).

5. A unit as claimed in claim 1
wherein the washout receiving region (20) comprises two portions, each portion being arranged to accommodate a respective permeable container (21,22).

6. A method of neutralising washout from concreting operations, the method comprising the steps of:
providing a portable unit (10) in accordance with any preceding claim to contain the washout,
receiving the washout in the portable unit, and
transferring a washwater component from the washout receiving region (20) of the portable unit (10), while storing concrete solids from the washout in the washout receiving region (20),
**characterised in that** the method further comprises the steps of:
providing the portable unit (10) with a store (44, 45) of a neutralising agent,
transferring the washwater component from the washout receiving region (20) of the unit (10) to a washwater containment region (14) of the unit, and
supplying the neutralising agent to the washout stored in the washwater containment region (14) of the unit (10).

7. A method as claimed in claim 6
wherein the method further comprises the steps of:
measuring the pH level of the washwater in the washwater containment region (14) of the unit (10), and
regulating the supply of the neutralising agent based on the pH level measured.

8. A method as claimed in claim 6 or 7 wherein the method further comprises the steps of:
accommodating a permeable container (21,22) in the washout receiving region (20),
receiving washout in the permeable container (21,22),
draining liquid in the washout through the permeable container (21,22) into the washwater containment region (14), and
retaining solid material in the washout in the permeable container (21,22).

## Patentansprüche

1. Tragbare Einheit zum Behandeln einer Auswaschung, wobei die Einheit umfasst:
einen Bereich (20) zum Aufnehmen der Auswaschung und zum Trennen und Aufbewahren von Betonfeststoffen aus der Auswaschung, während eine Waschwasserkomponente von dem Auswaschungsaufnahmebereich (21) umgeladen wird, **dadurch gekennzeichnet, dass** die tragbare Einheit (10) ferner Folgendes umfasst:
einen Waschwasseraufbewahrungsbereich (14) zum Aufnehmen der Waschwasserkomponente, die von dem Auswaschungsaufnahmebereich (20) umgeladen wird, und zum Aufbewahren und Behandeln von Waschwasser,
einen Bereich für die Unterbringung einer Neutralisierungswirkstoffquelle, um eine Quelle für einen Neutralisierungswirkstoff (44, 45) unterzubringen, und
einen pH-Einsteller (47) zum Neutralisieren des Waschwassers, wobei der pH-Einsteller dafür ausgelegt ist, mit der Neutralisierungswirkstoffquelle verbunden werden zu können, und wobei der pH-Einsteller dafür ausgelegt ist, den Neutralisierungswirkstoff dem in dem Waschwasseraufbewahrungsbereich (14) aufbewahrten Waschwasser zuzuführen, wobei der Auswaschungsaufnahmebereich (21) und der Waschwasseraufbewahrungsbereich (14) in der Weise angeordnet sind, dass die Feststoffe in der Auswaschung in dem Auswaschungsaufnahmebereich (20) zurückgehalten werden und Waschwasser in der Auswaschung aus dem Auswaschungsaufnahmebereich (20) in den Waschwasseraufbewahrungsbereich (14) entleert wird,
wobei der pH-Einsteller (47) dafür ausgelegt ist, dem Waschwasser in dem Waschwasseraufbewahrungsbereich (14) einen Neutralisierungswirkstoff zuzuführen, wobei das Verhältnis des Volumens des Waschwasseraufbewahrungsbereichs (14) zu dem Volumen des Auswaschungsaufnahmebereichs (20) im Bereich von 3 bis 8 liegt, und
wobei der Auswaschungsaufnahmebereich (20) dafür ausgelegt ist, einen permeablen Behälter (21, 22) aufzunehmen, derart, dass dann, wenn eine Auswaschung in den permeablen Behälter (21, 22) aufgenommen wird, Waschwasser in der Auswaschung durch den permeablen Behälter (21, 22) in den Waschwasseraufbewahrungsbereich (14) entleert wird und Feststoffmaterial in der Auswaschung in dem permeablen Behälter (21, 22) zurückgehalten wird.

2. Einheit nach Anspruch 1, wobei der pH-Einsteller ferner umfasst:
einen pH-Sensor zum Messen eines pH-Pegels des Waschwassers und
eine Neutralisierungswirkstoffversorgungssteuereinheit (47) zum Steuern der Zufuhr des Neutralisierungswirkstoffs zu dem Waschwasser,
wobei der pH-Sensor und die Neutralisierungswirkstoffversorgungs-Steuereinheit (47) derart verbunden sind, dass die NeutralisierungswirkstoffversorgungsSteuereinheit die Zufuhr des Neutralisierungswirkstoffs anhand des durch den pH-Sensor gemessenen pH-Pegels regulieren kann.

3. Einheit nach Anspruch 1 oder Anspruch 2, wobei die Einheit einen Batterieunterbringungsbereich für die Unterbringung einer Batterie (46) umfasst und wobei der pH-Einsteller (47) dafür ausgelegt ist, durch die Batterie mit Leistung versorgt zu werden, so dass die Einheit nicht auf eine externe Leistungsversorgung angewiesen ist.

4. Einheit nach Anspruch 3, wobei der Batterieunterbringungsbereich, der Neutralisierungswirkstoffquellenunterbringungsbereich und die Neutrali-sierungswirkstoffversorgungssteuereinheit sämtlich in einer Kammer (48) der Einheit (10) enthalten sind.

5. Einheit nach Anspruch 1, wobei der Auswaschungsaufnahmebereich (20) zwei Abschnitte umfasst, wobei jeder Abschnitt dafür ausgelegt ist, einen entsprechenden permeablen Behälter (21, 22) aufzunehmen.

6. Verfahren zum Neutralisieren einer Auswaschung von Betonarbeiten,
wobei das Verfahren die folgenden Schritte umfasst:
Bereitstellen einer tragbaren Einheit (10) nach einem vorhergehenden Anspruch, um die Auswaschung zu enthalten,
Empfangen der Auswaschung in der tragbaren Einheit und
Umladen einer Waschwasserkomponente von dem Auswaschungsaufnahmebereich (20) der tragbaren Einheit (10), während Betonfeststoffe von der Auswaschung in dem Auswaschungsaufnahmebereich (20) aufbewahrt werden,
**dadurch gekennzeichnet, dass** das Verfahren ferner die folgenden Schritte umfasst:
Versehen der tragbaren Einheit (10) mit einem Speicher (44, 45) eines Neutralisierungswirkstoffs,
Umladen der Waschwasserkomponente von dem Auswaschungsaufnahmebereich (20) der Einheit (10) in einen Waschwasseraufbewahrungsbereich (14) der Einheit und
Zuführen des Neutralisierungswirkstoffs zu der Auswaschung, die in dem Waschwasseraufbewahrungsbereich (14) der Einheit (10) aufbewahrt wird.

7. Verfahren nach Anspruch 6, wobei das Verfahren ferner die folgenden Schritte umfasst:
Messen des pH-Pegels des Waschwassers in dem Waschwasseraufbewahrungsbereich (14) der Einheit (10) und
Regulieren der Zufuhr des Neutralisierungswirkstoffs anhand des gemessenen pH-Pegels.

8. Verfahren nach Anspruch 6 oder 7, wobei das Verfahren ferner die folgenden Schritte umfasst:
Aufnehmen eines permeablen Behälters (21, 22) in den Auswaschungsaufnahmebereich (20),
Empfangen einer Auswaschung in dem permeablen Behälter (21, 22),
Entleeren von Flüssigkeit in der Auswaschung durch den permeablen Behälter (21, 22) in den Waschwasseraufbewahrungsbereich (14) und
Zurückhalten von Feststoffmaterial in der Auswaschung in dem permeablen Behälter (21, 22).

## Revendications

1. Unité portative permettant de traiter un mélange obtenu après lavage, ladite unité comprenant :
une zone (20) permettant de recevoir le mélange obtenu après lavage et de séparer et de stocker des solides de béton provenant du mélange obtenu après lavage tout en transférant un composant de l'eau de lavage de l'unité provenant de la zone de réception (21) du mélange obtenu après lavage, **caractérisée en ce que** l'unité portative (10) comprend en outre :
une zone de confinement de l'eau de lavage (14) destinée à recevoir le composant de l'eau de lavage transféré de la zone de réception (20) du mélange obtenu après lavage et à stocker et à traiter l'eau de lavage,
une zone d'hébergement de la source d'agent de neutralisation permettant d'héberger une source d'agent de neutralisation (44, 45), et
un tampon (47) permettant de neutraliser l'eau de lavage, dans lequel le tampon est agencé de manière à pouvoir être raccordé à la source d'agent de neutralisation, et dans lequel le tampon est agencé de manière à alimenter l'eau de lavage stockée dans la zone d'hébergement de l'eau de lavage (14) en agent de neutralisation,
dans lequel la zone de réception (21) du mélange obtenu après lavage et la zone de confinement de l'eau de lavage (14) sont agencées de telle manière que les solides dans le mélange obtenu après lavage sont retenus dans la zone de réception (20) du mélange obtenu après lavage, et que l'eau de lavage contenue dans le mélange obtenu après lavage est évacuée de la zone de réception du mélange obtenu après lavage (20) dans la zone de confinement de l'eau de lavage (14),
dans lequel le tampon (47) est agencé de manière à alimenter l'eau de lavage dans la zone de confinement de l'eau de lavage (14) en agent de neutralisation,
dans lequel le rapport du volume de la zone de confinement de l'eau de lavage (14) sur le volume de la zone de réception du mélange obtenu après lavage (20) est compris entre 3 et 8, et
dans lequel la zone de réception du mélange obtenu après lavage (20) est agencée de manière à héberger un conteneur perméable (21, 22) de telle sorte que, lorsque le mélange obtenu après lavage est reçu dans le conteneur perméable (21, 22), l'eau de lavage du mélange obtenu après lavage s'évacue à travers le conteneur perméable (21, 22) dans la zone de confinement de l'eau de lavage (14) et le matériau solide dans le mélange obtenu après lavage est retenu dans le conteneur perméable (21, 22).

2. Unité selon la revendication 1, dans laquelle le tampon comprend en outre :
un détecteur de pH permettant de mesurer un niveau de pH de mélange obtenu après lavage, et
un système de commande de l'alimentation en agent de neutralisation (47) permettant de commander l'alimentation de l'eau de lavage en agent de neutralisation,
dans lequel le détecteur de pH et le système de commande de l'alimentation en agent de neutralisation (47) sont raccordés de telle manière que le système de commande de l'alimentation en agent de neutralisation peut réguler l'alimentation en agent de neutralisation en se fondant sur le niveau de pH mesuré par le détecteur de pH.

3. Unité selon les revendications 1 ou 2, dans laquelle l'unité comprend une zone d'hébergement d'une batterie permettant d'héberger une batterie (46) et dans laquelle le détecteur de pH (47) est agencé de manière à être alimenté par la batterie, de telle manière que l'unité n'ait pas à dépendre d'une alimentation électrique extérieure.

4. Unité selon la revendication 3, dans laquelle la zone d'hébergement d'une batterie, la zone d'hébergement de la source d'agent de neutralisation et le système de commande de l'alimentation en agent de neutralisation sont tous contenus dans une chambre (48) de l'unité (10).

5. Unité selon la revendication 1, dans laquelle la zone de réception (20) du mélange obtenu après lavage comprend deux parties, chaque partie étant agencée de manière à héberger un conteneur perméable (21, 22) respectif.

6. Procédé de neutralisation d'un mélange obtenu après lavage provenant d'opérations de bétonnage, le procédé comprenant les étapes consistant à :
fournir une unité portative (10) selon l'une quelconque des revendications précédentes afin de contenir le mélange obtenu après lavage,
recevoir le mélange obtenu après lavage dans l'unité portative, et
transférer un composant de l'eau de lavage provenant de la zone de réception (20) du mélange obtenu après lavage de l'unité portative (10), tout en stockant les solides de béton provenant du mélange obtenu après lavage dans la zone de réception (20) du mélange obtenu après lavage,
**caractérisé en ce que** le procédé comprend en outre les étapes consistant à :
équiper l'unité portative (10) d'un stockage (44, 45) de l'agent de neutralisation,
transférer le composant de l'eau de lavage provenant de la zone de réception (20) du mélange obtenu après lavage de l'unité (10) vers une zone de confinement de l'eau de lavage (14) de l'unité, et
alimenter le mélange obtenu après lavage stocké dans la zone de confinement de l'eau de lavage (14) de l'unité (10) en agent de neutralisation.

7. Procédé selon la revendication 6, dans lequel le procédé comprend en outre les étapes consistant à :
mesurer le niveau de pH de l'eau de lavage dans la zone de confinement de l'eau de lavage (14) de l'unité (10), et
réguler l'alimentation en agent de neutralisation, en se fondant sur le niveau de pH mesuré.

8. Procédé selon les revendications 6 ou 7, dans lequel le procédé comprend en outre les étapes consistant à :
héberger un conteneur perméable (21, 22) dans la zone de réception (20) du mélange obtenu après lavage,
recevoir le mélange obtenu après lavage dans le conteneur perméable (21, 22),
évacuer le liquide du mélange obtenu après lavage à travers le conteneur perméable (21, 22) dans la zone de confinement de l'eau de lavage (14), et
retenir les matériaux solides du mélange obtenu après lavage dans le conteneur perméable (21, 22).
